# EUROPEAN PATENT APPLICATION

(11) **EP 4 826 519 A1**
(43) Date of publication of application: **21.10.2026**
(21) Application number: 25211161.2
(22) Date of filing: 24.10.2025
(51) Int. Cl.: G06F 3/16, G06V 20/20, G06F 3/01, G10L 15/22

(54) **METHOD, APPARATUS, DEVICE, AND STORAGE MEDIUM FOR IMAGE INTERACTION**

(30) Priority: 16.04.2025 CN 202510484309
(71) Applicant: Beijing Zitiao Network Technology Co., Ltd., Beijing 100190 (CN)
(72) Inventor: CAI, Wei, Beijing, 100028 (CN); ZHAO, Weize, Beijing, 100028 (CN); QIAO, Wende, Beijing, 100028 (CN); DING, Xiaopeng, Beijing, 100028 (CN); LI, Xingyi, Beijing, 100028 (CN); LIU, Xiao, Beijing, 100028 (CN); LI, Jun, Beijing, 100028 (CN); XUE, Jinbo, Beijing, 100028 (CN)
(74) Representative: Marks & Clerk LLP

(57) **Abstract**

Embodiments of the disclosure relate to a method, an apparatus, a device, and a storage medium for image interaction. The method proposed herein is applied on an electronic device, and the method includes: capturing, using an image acquisition unit equipped on the electronic device, a plurality of images in response to the electronic device being in a first mode; and actively outputting content using a content output unit of the electronic device, wherein the content is generated by a pre-trained model based on at least one of the plurality of images. In this way, the embodiments of the disclosure are capable of enabling the electronic device to actively provide the content to a user based on the captured images, thereby meeting interaction needs of the user.

## Description

### TECHNICAL FIELD

Example embodiments of the present disclosure generally relate to the field of computers, and in particular, to a method, an apparatus, a device, and a computer-readable storage medium for image interaction.

### BACKGROUND

With the increasing maturity of science and technology, the use of electronic devices has gradually become a daily habit of people. For example, a user may use an electronic device to play audio content, check the time, measure physiological data, and so on. In addition, people may also use electronic devices to perform interaction operations. However, the interaction operations supported by existing electronic devices only include some simple interaction operations such as playing audio and switching audio, which cannot meet the deeper interaction needs of users.

### SUMMARY

In a first aspect of the present disclosure, a method of image interaction is provided, which is applied on an electronic device. The method includes: capturing, using an image acquisition unit equipped on the electronic device, a plurality of images in response to the electronic device being in a first mode; and actively outputting content using a content output unit of the electronic device, wherein the content is generated by a pre-trained model based on at least one of the plurality of images.

In a second aspect of the present disclosure, a method of image interaction is provided, which is applied on a terminal device. The method includes: obtaining a plurality of images from an electronic device in wireless communication with the terminal device, the plurality of images being captured using an image acquisition unit equipped on the electronic device in response to the electronic device being in a first mode; obtaining content, wherein the content is generated by a pre-trained model based on at least one of the plurality of images; and sending the content to the electronic device, to actively output the content using a content output unit equipped on the electronic device.

In a third aspect of the present disclosure, a method of image interaction is provided, which is applied on an image interaction system. The image interaction system includes an electronic device and a terminal device that are in wireless communication. The method includes: capturing, using an image acquisition unit equipped on the electronic device, a plurality of images in response to the electronic device being in a first mode; sending, by the electronic device, the plurality of images to the terminal device; obtaining content by the terminal device, content, wherein the content is generated by a pre-trained model based on at least one of the plurality of images; and sending, by the terminal device, the content to the electronic device, to actively output the content using a content output unit equipped on the electronic device.

In a fourth aspect of the present disclosure, an apparatus for image interaction is provided, which is applied on an electronic device. The apparatus includes: an image acquisition module configured to capture, using an image acquisition unit equipped on the electronic device, a plurality of images periodically in response to the electronic device being in a first mode; and a first playing module configured to actively play speech content using an audio playing unit of the electronic device, wherein the speech content is generated by a pre-trained model based on at least one of the plurality of images.

In a fifth aspect of the present disclosure, an apparatus for image interaction is provided, which is applied on a terminal device. The apparatus includes: an image obtaining module configured to obtain a plurality of images from an electronic device in wireless communication with the terminal device, the plurality of images being captured using an image acquisition unit equipped on the electronic device in response to the electronic device being in a first mode; a first obtaining module configured to obtain content, wherein the content is generated by a pre-trained model based on at least one of the plurality of images; and a sending module configured to send speech content to the electronic device, to actively output the content using a content output unit equipped on the electronic device.

In a sixth aspect of the present disclosure, an apparatus for image interaction is provided, which is applied on an image interaction system. The image interaction system includes an electronic device and a terminal device that are in wireless communication. The apparatus includes: an image capturing module configured to capture, using an image acquisition unit equipped on the electronic device, a plurality of images periodically in response to the electronic device being in a first mode; an image sending module configured to send, by the electronic device, the plurality of images to the terminal device; a second obtaining module configured to obtain content by the terminal device, wherein the content is generated by a pre-trained model based on at least one of the plurality of images; and a second playing module configured to send, by the terminal device, speech content to the electronic device, to actively output the content using a content output unit equipped on the electronic device.

In a seventh aspect of the present disclosure, an electronic device is provided. The device includes at least one processing unit; and at least one memory coupled to the at least one processing unit and storing instructions executable by the at least one processing unit. The instructions, when executed by the at least one processing unit, cause the device to perform the method of the first aspect, the second aspect, or the third aspect.

In an eighth aspect of the present disclosure, a computer-readable storage medium is provided. The computer-readable storage medium stores a computer program executable by a processor to implement the method of the first aspect, the second aspect, or the third aspect.

It should be understood that the content described in this Summary is neither intended to identify key or essential features of the embodiments of the present disclosure, nor is it intended to limit the scope of the present disclosure. Other features of the present disclosure will be readily envisaged through the following description.

### BRIEF DESCRIPTION OF THE DRAWINGS

The above and other features, advantages, and aspects of the embodiments of the present disclosure will become more apparent by referring to the following detailed description in conjunction with the drawings. In the drawings, the same or similar reference numbers refer to the same or similar elements, where:
Fig. 1 shows a schematic diagram of an example image interaction system in which embodiments according to the present disclosure may be implemented;
Fig. 2 shows a flowchart of an example process for image interaction according to some embodiments of the present disclosure;
Fig. 3A to Fig. 3C show example interfaces according to some embodiments of the present disclosure;
Fig. 4 shows a flowchart of an example process of image interaction according to some embodiments of the present disclosure;
Fig. 5 shows a flowchart of an example process of image interaction according to some other embodiments of the present disclosure;
Fig. 6 shows a flowchart of an example process of image interaction according to some other embodiments of the present disclosure;
Fig. 7 shows a schematic structural block diagram of an example apparatus for image interaction according to some embodiments of the present disclosure;
Fig. 8 shows a schematic structural block diagram of an example apparatus for image interaction according to some other embodiments of the present disclosure;
Fig. 9 shows a schematic structural block diagram of an example apparatus for image interaction according to some other embodiments of the present disclosure; and
Fig. 10 shows a block diagram of an electronic device capable of implementing multiple embodiments of the present disclosure.

### DETAILED DESCRIPTION OF EMBODIMENTS

Embodiments of the present disclosure are described in more detail below with reference to the drawings. Although some embodiments of the present disclosure are shown in the drawings, it should be understood that the present disclosure may be implemented in various forms and should not be construed as limited to the embodiments set forth herein; on the contrary, these embodiments are provided for a more thorough and complete understanding of the present disclosure. It should be understood that the drawings and embodiments of the present disclosure are only for illustrative purposes and are not intended to limit the protection scope of the present disclosure.

It should be noted that the titles of any section/subsection provided herein are not restrictive. Various embodiments are described throughout this article, and any type of embodiment may be included under any section/subsection. In addition, the embodiments described in any section/subsection may be combined with any other embodiments described in the same section/subsection and/or different sections/subsections in any manner.

In the description of the embodiments of the present disclosure, the term "include/comprise" and similar terms thereof should be understood as open-ended inclusions, that is, "include/comprise but not limited to". The term "based on" should be understood as "at least partially based on". The term "one embodiment" or "the embodiment" should be understood as "at least one embodiment". The term "some embodiments" should be understood as "at least some embodiments". Other explicit and implicit definitions may also be included below. The terms "first", "second", etc. may refer to different or same objects. Other explicit and implicit definitions may also be included below.

The embodiments of the present disclosure may involve user data, data acquisition, and/or data use. These aspects all comply with corresponding laws, regulations, and related provisions. In the embodiments of the present disclosure, all data collection, acquisition, processing, machining, forwarding, use, etc. are performed on the premise that the user is aware and confirms. Accordingly, when implementing the embodiments of the present disclosure, the user should be informed of the type, use scope, use scenarios, etc., of possible involved data or information in an appropriate manner according to relevant laws and regulations, and the authorization of the user should be obtained. The specific manner of informing and/or authorizing may vary according to actual situations and application scenarios, and the scope of the present disclosure is not limited in this regard.

If the solutions in this specification and the embodiments involve personal information processing, the processing will be performed on the premise that there is a legal basis (for example, the consent of the personal information subject is obtained, or it is necessary for the performance of a contract, etc.), and the processing will only be performed within the scope of regulations or agreements. If a user refuses to process personal information other than the necessary information required for basic functions, it will not affect the user's use of the basic functions.

As mentioned above, with the increasing maturity of science and technology, the use of electronic devices has gradually become a daily habit of people. For example, a user may use an electronic device to play audio content, check the time, measure physiological data, and so on. In addition, people may also use electronic devices to perform interaction operations. However, the interaction operations supported by existing electronic devices only include some simple interaction operations such as playing audio and switching audio, which cannot meet the deeper interaction needs of users.

An embodiment of the present disclosure provides a solution for image interaction applied on an electronic device. According to the solution, when the electronic device is in a first mode, an image acquisition unit equipped on the electronic device may be used to capture a plurality of images, and a content output unit of the electronic device may be used to actively output content, wherein the content is generated by a pre-trained model based on at least one of the plurality of images.

In this way, the embodiment of the present disclosure is capable of using the image acquisition unit equipped on the electronic device to capture the plurality of images when the electronic device is in the first mode. Moreover, the embodiment of the present disclosure is capable of using the electronic device to obtain and play the content generated by the pre-trained model based on the at least one of the plurality of images. In this way, the electronic device provided in the embodiment of the present disclosure is capable of capturing images, thereby being capable of obtaining information about the surroundings of the user in real time. In addition, the electronic device provided in the embodiment of the present disclosure is capable of using the pre-trained model to generate the content based on the captured images and actively outputting the content to the user, which may improve the efficiency of the user in obtaining information. Therefore, the embodiment of the present disclosure expands the interaction capability between the electronic device and the user, and meets the interaction needs of the user.

Various example implementations of the solution are described in detail below with further reference to the drawings.

### EXAMPLE IMAGE INTERACTION SYSTEM

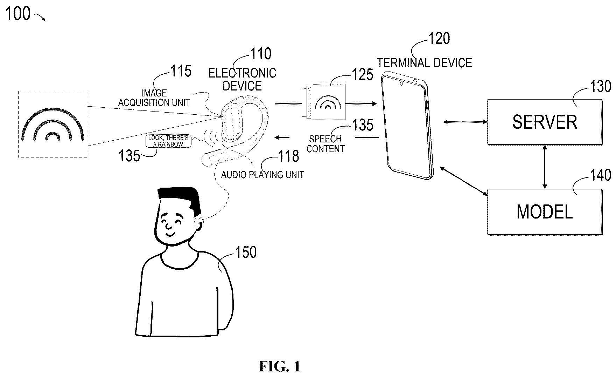

Fig. 1 shows a schematic diagram of an example image interaction system 100 according to an embodiment of the present disclosure. As shown in Fig. 1, the image interaction system 100 may include an electronic device 110 and a terminal device 120. A communication connection may be established between the electronic device 110 and the terminal device 120. As an example, the electronic device 110 may be connected to the terminal device 120 based on an appropriate wireless connection manner; or, for example, the electronic device 110 may also establish a wired connection with the terminal device 120. For example, the communication connection may include, but is not limited to, a Bluetooth connection, a mobile network connection, a Universal Serial Bus (USB) connection, a Wireless Fidelity (WiFi) connection, etc., which is not limited in the embodiment of the present disclosure. As shown in Fig. 1, the electronic device 110 may be equipped with one or more image acquisition units 115. For example, the image acquisition unit 115 may be implemented as a camera assembly (e.g., a camera).

As an example, the electronic device 110 may include a wearable device or other devices. The wearable device may include, for example, a headphone device in an appropriate form, such as an in-ear headphone, a behind-the-ear headphone, an on-ear headphone, etc. The present disclosure is not intended to limit the form of the headphone device.

Additionally, the headphone device may be equipped with an image acquisition unit 115 (e.g., a camera) disposed at an appropriate position to support using the camera to capture an environment image of the user 150 when the user 150 wears the headphone device.

In some examples, the headphone device may be equipped with a single camera or a plurality of cameras. For example, a left-ear headphone and a right-ear headphone may be respectively equipped with one camera. As another example, the headphone device may also be only equipped with a single camera. For example, only the right-ear headphone is equipped with a camera, and the left-ear headphone may not be equipped with a camera.

In some other examples, the electronic device 110 may also be implemented in other appropriate forms. For example, the electronic device 110 may include a glasses device equipped with one or more cameras. For example, such a camera may be disposed at a frame or a temple of the glasses device.

In some embodiments, the electronic device 110 may be provided with an audio acquisition unit (e.g., a microphone) and a content output unit. The content output unit may include, for example, at least one of a screen display unit (e.g., a display screen, a projection device, etc.) or an audio playing unit 118 (e.g., a speaker). Specifically, the electronic device 110 may use the audio acquisition unit to capture audio data, and may send the audio data to the terminal device 120. Alternatively, the electronic device 110 may also use the audio playing unit 118 to play audio data from the terminal device 120. Alternatively, the electronic device 110 may use the screen display unit to display image content and/or text content from the terminal device 120.

In some embodiments, the electronic device 110 may also be associated with a voice assistant application installed in the terminal device 120. For example, the user 150 may use the electronic device 110 to perform voice interaction with the voice assistant application. Additionally, as will be described below, the terminal device 120 may also provide a graphical interface of the voice assistant application to provide visual interaction information associated with the voice assistant application.

In some embodiments, the terminal device 120 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a Personal Communication System (PCS) device, a personal navigation device, a Personal Digital Assistant (PDA), an audio/video player, a digital camera/video camera, a positioning device, a television receiver, a radio broadcast receiver, an e-book device, a game device, or any combination of the above, including the accessories and peripherals of these devices or any combination thereof. In some embodiments, the terminal device 120 may also support any type of interface for the user (such as a "wearable" circuit, etc.).

As shown in Fig. 1, the voice assistant application uses a pre-trained model 140 to interact with the user 150 in a variety of appropriate modes. As an example, the pre-trained model 140 may be a language model or a generative model that supports multimodal data processing.

In some embodiments, the pre-trained model 140 may be deployed at the terminal device 120. Alternatively, the pre-trained model 140 may also be deployed at the server 130. When the pre-trained model 140 is deployed at the server 130, the terminal device 120 may call the model 140 via a communication connection with the server 130 to implement interaction within the voice assistant application. For example, the server 130 may be an independent physical server, a server cluster or distributed system composed of multiple physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server, such as a mainframe, an edge computing node, a computing device in a cloud environment, etc. The server 130 may provide background services for the voice assistant application in the terminal device 120.

In some embodiments, the electronic device 110 may have multiple working modes. Different working modes may be related to the working modes of the image acquisition unit 115 and the audio playing unit 118, for example.

Taking the headphone device as an example, when the headphone device is in a normal conversation mode, the image acquisition unit 115 will not be enabled by default, for example. Only when a clear instruction (e.g., taking a photo) from the user is received, the image acquisition unit 115 will be enabled. Moreover, when the headphone device is in the normal conversation mode, the audio playing unit 118 only plays corresponding audio content (e.g., music content) based on the user's operation (e.g., playing music), or the audio playing unit 118 plays reply content of the voice assistant application to the user's voice instruction after the voice assistant application receives the user's voice instruction. The audio playing unit 118 is not enabled by default until the user's operation or voice instruction is received.

As will be described in detail below, the electronic device 110 may also run in a first mode. The first mode may support, for example, that the image acquisition unit 115 is in a normally-on state, and in the first mode, the image acquisition unit 115 may capture images 125. For example, in the first mode, the image acquisition unit 115 may periodically capture images. In addition, the first mode may also support that the content output unit actively outputs content to the user (e.g., the audio playing unit 118 actively plays speech content (or referred to as audio content) and/or the screen display unit actively displays image content (e.g., pictures and/or videos) and/or text content). The content here is generated by the pre-trained model based on at least one of the plurality of images 125.

For example, when the user wears the electronic device 110, the user may enable the first mode of the electronic device 110. The specific process of activating the first mode will be described in detail below. For example, the user may use a voice instruction (e.g., "enable the first mode") to trigger the electronic device 110 to enter the first mode.

Accordingly, during the first mode, the image acquisition unit 115 of the electronic device 110 may capture images, for example, periodically capture images. For example, when the headphone device worn by the user is in the first mode, the camera of the headphone device may periodically capture environment images of the user.

As shown in Fig. 1, the captured images 125 may be sent to the terminal device 120 for determining whether the images 125 satisfy a trigger condition. The specific process of determining the trigger condition will be described in detail below. For example, the trigger condition here includes that the images 125 match a preset scene. For example, the preset scene may include a "supermarket", a "snow scene", a "rainbow", a "historical building", and/or a "sunset", etc. For example, if a "rainbow" is included in an image 125, it may be determined that the image 125 matches the preset scene (e.g., the "rainbow"), thereby satisfying the trigger condition.

Further, when a target image in the plurality of images 125 satisfies the trigger condition, the model 140 may generate response content based on the target image. Specifically, after the target image in the plurality of images 125 is determined to satisfy the trigger condition, the plurality of images 125 or the target image in the plurality of images 125 may be provided to the model 140 for generating the response content for the target image, such as the speech content 135 or text content (e.g., text content corresponding to the speech content 135). The generated text content may be converted into speech content (e.g., the speech content 135) by the model 140, the server 130, and/or the terminal device 120, for example.

As will be described in detail below, it may be determined by the electronic device 110, the terminal device 120, the server 130, and/or the model 140 whether there is the target image that satisfies the trigger condition based on the plurality of captured images 125.

Taking Fig. 1 as an example, the image interaction system 100 may use the audio playing unit 118 equipped on the electronic device 110 to play the speech content 135. The speech content 135 may include, for example, reminder content for the image 125, such as "Look, there's a rainbow".

Therefore, in the first mode, the image interaction system 100 may periodically capture the plurality of images by using the image acquisition unit 115 equipped on the electronic device 110, and generate the response content for the captured images after the captured images satisfy the trigger condition. Moreover, the image interaction system 100 may use the audio playing unit 118 equipped on the electronic device 110 to actively play the speech content associated with the response content to the user 150. Alternatively, the image interaction system 110 may use the screen display unit equipped on the electronic device 110 to actively present the image content and/or the text content associated with the response content to the user 150. Therefore, the electronic device 110 provided in the embodiment of the present disclosure may actively output the content generated based on the image to the user after capturing the image that satisfies the trigger condition, thereby being capable of improving the efficiency of the user in obtaining information and meeting the interaction needs of the user.

In addition, the image interaction system 100 may support determining whether the image 125 satisfies the trigger condition by using historical interaction between the user 150 and the voice assistant application. For example, if the historical interaction between the user and the voice assistant application is related to "pastry recommendation", it may be determined that the image 125 satisfies the trigger condition when the image 125 contains a "pastry shop". For example, the generated speech content may include, for example, "This pastry shop suits your taste very well". Alternatively, the trigger condition here may also be set based on the user's voice instruction. For example, the trigger condition set based on the user's voice instruction may include "tell me when you see XX bookstore", so that it may be determined that the image 125 satisfies the trigger condition when the image 125 contains "XX bookstore". For example, the generated speech content may include "there is the XX bookstore you mentioned 10 meters ahead".

It should be understood that the structures and functions of the elements in the image interaction system 100 are described for illustrative purposes only, without suggesting any limitation to the scope of the present disclosure.

The specific processing flow of the image interaction system 100 will be described in detail below with reference to the drawings.

### EXAMPLE IMAGE INTERACTION

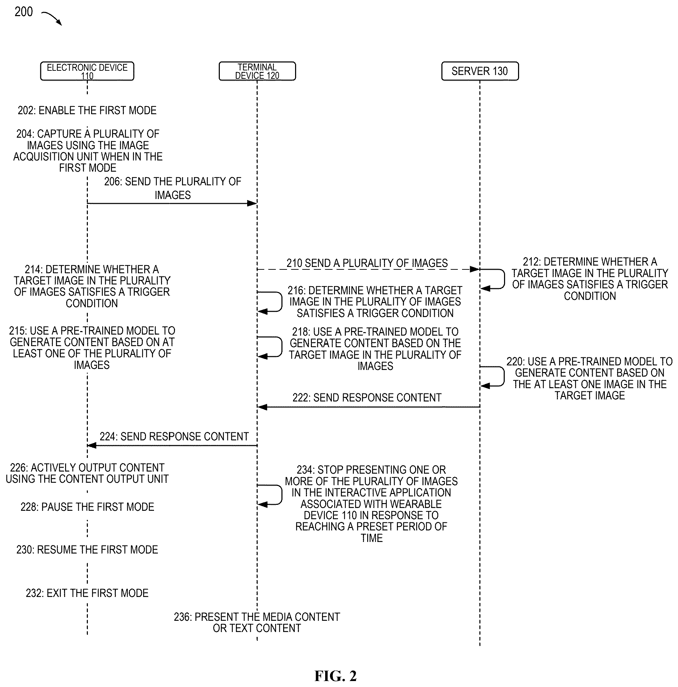

Fig. 2 shows a flowchart of an example process 200 for image interaction according to some embodiments of the present disclosure. The process 200 may be implemented at the electronic device 110, the terminal device 120, and/or the server 130. Alternatively, the process 200 may also be implemented in the image interaction system 100 including the electronic device 110 and the terminal device 120 that are in wireless communication. The process 200 is described below with reference to Fig. 1.

As shown in Fig. 2, the electronic device 110 may enable (202) a first mode. As an example, the first mode may be a mode in which an image acquisition unit 115 of the electronic device 110 is set to be normally on, and the electronic device 110 is allowed to be in a mode of actively outputting content (e.g., an audio playing unit 118 actively plays speech content and/or a screen display unit actively presents content). Alternatively, the electronic device 110 may further include a second mode (e.g., a normal conversation mode). For example, the second mode may indicate that the image acquisition unit 115 of the electronic device 110 is not enabled by default. Only when an explicit instruction (e.g., "take a photo") from a user is received, the image acquisition unit 115 will be started. Moreover, the second mode prohibits the electronic device 110 from actively outputting content.

The mode of the electronic device 110 may be determined based on a configuration operation of the user 150. Alternatively, the electronic device 110 may also switch the mode of the electronic device (e.g., switch from the first mode to the second mode) in response to a preset operation (e.g., a voice instruction (e.g., "switch to the second mode"), etc.) of the user.

As an example, the first mode of the electronic device 110 may be enabled (or referred to as woken up) in response to an enable request of the user 150. As an example, such an enable request may include, for example, a voice instruction (e.g., also referred to as a second voice instruction) received via an audio acquisition unit of the electronic device 110. As an example, the second voice instruction may include, for example, a preset keyword (e.g., "enable the first mode", "start a conversation", etc.). The present disclosure is not intended to limit the specific content of the preset keyword. In this way, the embodiment of the present disclosure may support the user in quickly enabling the first mode of the electronic device 110 based on the voice instruction, thereby improving the interaction efficiency between the user and the electronic device.

Alternatively, the electronic device 110 may be associated with a voice assistant application. As an example, the voice assistant application may be installed in the terminal device 120. The electronic device 110 may receive a voice instruction (e.g., speech content associated with a preset keyword (e.g., "enable the first mode")) of the user 150 in a conversation with the voice assistant application. For example, the user 150 may have a conversation with a voice assistant based on the voice assistant application. The electronic device 110 may enable the first mode of the electronic device 110 in response to receiving an end request of the conversation. Alternatively, the electronic device 110 may enable the first mode of the electronic device 110 in response to no voice message being received in a preset period of time (e.g., 2 minutes) in the conversation with the voice assistant application. In this way, the embodiment of the present disclosure may support the user in enabling the first mode of the electronic device through the conversation with the voice assistant application. Moreover, the embodiment of the present disclosure may support enabling the first mode of the electronic device 110 after the conversation with the voice assistant application ends, which effectively avoids a conflict between a process of the electronic device 110 in the first mode receiving speech content and the conversation process between the user and the voice assistant application, and ensures the quality of interaction between the user 150 and the electronic device 110 and between the user 150 and the voice assistant application.

As an example, the voice assistant may include any appropriate processing entity that supports interaction through prompts and the like. In some scenarios, the voice assistant may include, but is not limited to, an agent or other assistants that support interaction through conversations (e.g., text conversations or voice conversations, etc.). It should be understood that, on the one hand, the voice assistant may have an avatar for interaction. On the other hand, the voice assistant may also use an appropriate model to drive its interaction behavior, and such a model may include any appropriate machine learning model, such as a generative model. The present disclosure is not intended to limit the specific construction of the voice assistant.

Alternatively, such an enable request may include, for example, an enable operation received via an interactive interface associated with the electronic device 110. Such an interactive interface may be provided by the terminal device 120 communicating with the electronic device 110, for example.

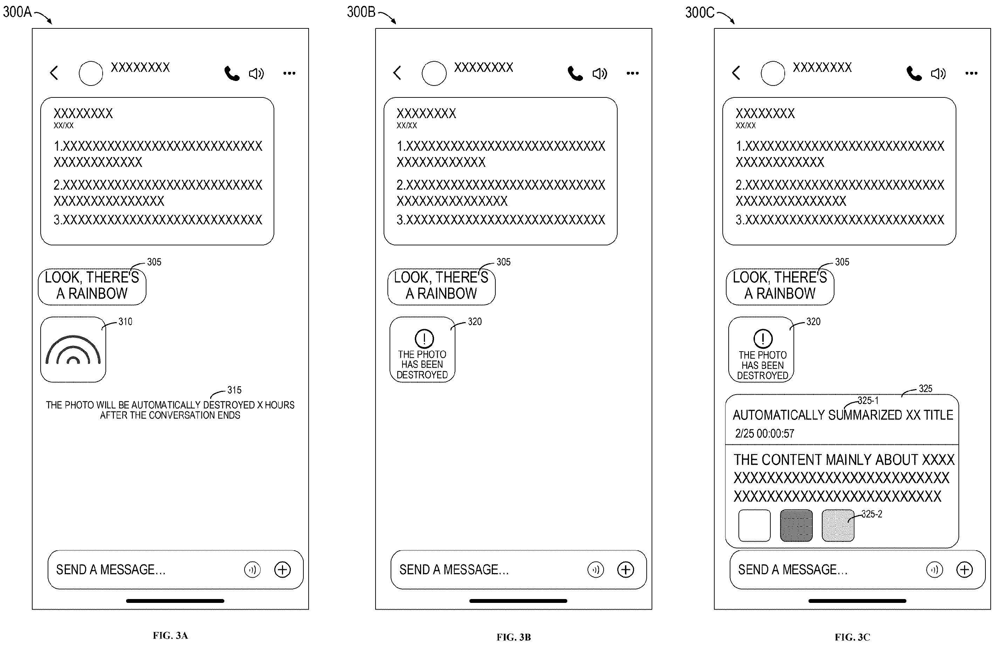

The process 200 is illustratively described below based on Fig. 3A to Fig. 3C. It should be understood that Fig. 3A to Fig. 3C and the corresponding embodiments are only for illustrative purposes, and are not intended to limit the protection scope of the present disclosure.

Fig. 3A to Fig. 3C show an example interface 300A and an example interface 300C according to some embodiments of the present disclosure. The interface 300A to the interface 300C may be provided by the terminal device 120 shown in Fig. 1, for example.

In some embodiments, as shown in Fig. 3A, the terminal device 120 may present the interactive interface 300A. Alternatively, the terminal device 120 may trigger the electronic device 110 to enable the first mode in response to receiving an enable operation of the user 150 in the interactive interface 300A. Alternatively, such an enable operation may also include triggering (e.g., a click operation) on a control (not shown in the figure) associated with the first mode in the interactive interface 300A.

As an example, the interactive interface 300A may include a conversation interface between the user 150 and the voice assistant application (or referred to as a graphical interface of the voice assistant application). The user 150 may interact with the voice assistant through text, voice, video, or triggering of interactive controls, etc. based on the interactive interface 300A. Further, the voice assistant may respond to the user's interaction behavior. For example, the voice assistant may generate a conversation message or perform a corresponding action (e.g., call other applications (such as playing music, etc.)) for the user's interaction behavior. Further, the terminal device 120 may present the conversation message generated by the voice assistant in the interactive interface 300A. For example, the form of the conversation message may include a text form, an audio form, an image form (including picture content and video content) or the like. Alternatively, the terminal device 120 may trigger the electronic device 110 to enable the first mode in response to receiving the enable operation of the user 150 in the interactive interface 300A. For example, such an enable operation may include a conversation message (e.g., "enable the first mode", etc.) containing a preset keyword sent by the user 150 to the voice assistant.

Alternatively, the electronic device 110 further includes a mode reminder unit. The electronic device 110 may use the mode reminder unit to provide a reminder signal indicating that the electronic device 110 is in the first mode. For example, such a mode reminder unit may be implemented as an LED light. The reminder signal indicating that the electronic device 110 is in the first mode may include, for example, that the LED light is presented in a first color (e.g., green). Alternatively, the reminder signal indicating that the electronic device 110 is not in the first mode may include, for example, that the LED light is off or presented in a second color (e.g., red) different from the first color.

In some embodiments, continuing to refer to Fig. 2, the electronic device 110 may use the image acquisition unit 115 to capture (204) a plurality of images when the electronic device 110 is in the first mode. As an example, the electronic device 110 may use the image acquisition unit 115 to periodically capture the plurality of images. As an example, the electronic device 110 may determine a time interval and/or a time length for capturing the plurality of images based on configuration information (also referred to as second configuration information) associated with the first mode, and periodically capture the plurality of images based on the time interval and/or the time length. As an example, such second configuration information may be determined based on, for example, an operation (e.g., a voice instruction, selection of a control related to the time interval and/or the time period, etc.) of the user. For example, the time period for the electronic device 110 to capture the plurality of images may be, for example, every 1 second, every 2 seconds, etc. The time length may indicate, for example, the time length for capturing dynamic image content (e.g., video content). For example, the time length may include 1 second, 2 seconds, 10 seconds, etc. The present disclosure is not intended to limit the specific values of the time period and the time length.

Alternatively, the electronic device 110 may determine a resolution associated with the first mode. Further, the electronic device 110 may capture at least a portion of the plurality of images based on the resolution. For example, the electronic device 110 may determine the resolution based on configuration information (also referred to as first configuration information) associated with the first mode. For example, the configuration information associated with the first mode includes preset configuration information or configuration information determined by a configuration operation of the user 150. As an example, the images may include picture content and/or video content. For example, for capturing video content, the resolution associated with the first mode may be, for example, a first resolution (e.g., 720P). For capturing picture content, the resolution associated with the first mode may be, for example, a second resolution (e.g., 1280×720 pixels).

Alternatively, the electronic device 110 may also determine the resolution based on a voice instruction of the user 150. For example, the electronic device 110 may update the resolution (e.g., adjust the resolution of the captured picture from 1280×720 pixels to 1920×1080 pixels) in response to receiving the voice instruction (e.g., "take a clearer picture") from the user.

In some embodiments, the electronic device 110 is a headphone device or a glasses device or the like that is equipped with at least one camera. In this way, the embodiment of the present disclosure may meet the visual interaction needs of the user by mounting a camera on the headphone device or the glasses device.

In some embodiments, the electronic device 110 may include a plurality of image acquisition units (e.g., cameras). The plurality of image acquisition units may include the image acquisition unit 115, for example. The electronic device 110 may be a headphone device, for example. The headphone device may include a left-ear headphone (or referred to as a first device) or a right-ear headphone (or referred to as a second device). The left-ear headphone and the right-ear headphone may be respectively equipped with at least one image acquisition unit (e.g., a camera). The electronic device 110 may use a target image acquisition unit in the plurality of image acquisition units to capture all the plurality of images. For example, the target image acquisition unit is determined based on configuration information (also referred to as third configuration information) associated with the first mode. For example, such configuration information may indicate that when the electronic device 110 is in the first mode, an image acquisition unit associated with the left-ear headphone is used as the target image acquisition unit in a first period of time (e.g., the first half hour when the electronic device 110 is in the first mode), and an image acquisition unit associated with the right-ear headphone is used as the target image acquisition unit in a second period of time (e.g., after the electronic device 110 has been in the first mode for half an hour).

Alternatively, the target image acquisition unit may also be determined based on a wearing state of the electronic device 110. For example, the electronic device 110 may use an image acquisition unit equipped on the left-ear headphone as the target image acquisition unit in response to the user 150 only wearing the first device (e.g., the left-ear headphone) of the electronic device 110 (e.g., the headphone device).

In some embodiments, the electronic device 110 may use a first image acquisition unit in the plurality of image acquisition units to periodically capture a first set of images during a first round of conversation. Moreover, the electronic device 110 may use a second image acquisition unit in the plurality of image acquisition units to periodically capture a second set of images during a second round of conversation after the first round of conversation ends. The second image acquisition unit is different from the first image acquisition unit. For example, the electronic device 110 may be the headphone device. The electronic device 110 may use an image acquisition unit (e.g., the first image acquisition unit) equipped on the left-ear headphone to periodically capture the first set of images during the first round of conversation, and use an image acquisition unit (e.g., the second image acquisition unit) equipped on the right-ear headphone to periodically capture the second set of images during the second round of conversation after the first round of conversation ends. In this way, the embodiment of the present disclosure may use a same image acquisition unit to capture images in one round of conversation, which ensures the stability of capturing images during the same round of conversation, and ensures the quality and correlation of the captured images. Moreover, based on the embodiment of the present disclosure, different image acquisition units are used to capture images in different rounds of conversation, and by rotating the image acquisition units, problems such as performance degradation or insufficient power caused by long-time operation of the image acquisition unit may be avoided, thereby ensuring the stability and reliability of image capturing.

In some embodiments, the electronic device 110 may send (206) (or referred to as transmit) the plurality of images captured based on the image acquisition unit 115 to the terminal device 120. For example, the electronic device 110 may transmit the images to the terminal device 120 in real time in response to receiving the images captured by the image acquisition unit. Alternatively, when the transmission speed is slower than the capturing speed, the electronic device 110 may store the images into the buffer unit, so as to send the images in the buffer unit to the terminal device 120 in turn. As an example, the terminal device 120 may obtain the plurality of images from the electronic device 110 in wireless communication with the terminal device 120. In this way, the embodiment of the present disclosure may in advance transmit the plurality of images captured by the electronic device to the terminal device in real time. In this way, the terminal device has already obtained the images transmitted by the electronic device before receiving the visual interaction request from the user, thereby reducing the waiting time of the user in the process of processing the visual interaction request, improving the efficiency of processing the visual interaction request, and meeting the interaction needs of the user.

In some embodiments, the plurality of images captured by the electronic device 110 using the equipped image acquisition unit 115 may be provided to the pre-trained model (e.g., the model 140) for the pre-trained model to generate content based on at least one of the plurality of images. The deployment of the pre-trained model may have three types: the pre-trained model is deployed at the electronic device 110, the pre-trained model is deployed at the terminal device 120, or the pre-trained model is deployed at the server 130. Illustrative descriptions will be given below for different model deployment locations.

The first type is that the electronic device 110 is deployed with the pre-trained model (e.g., the model 140). The electronic device 110 may directly provide the plurality of images to the pre-trained model. The electronic device 110 may use (215) the pre-trained model to generate content (e.g., speech content and/or text content) based on at least one of the plurality of images.

The second type is that the electronic device 110 is not deployed with the pre-trained model, and the terminal device 120 is deployed with the pre-trained model. The electronic device 110 may send (206) the plurality of images to the terminal device 120. The terminal device 120 may provide the plurality of images to the pre-trained model deployed at the terminal device 120. The terminal device 120 may use (218) the pre-trained model to generate content (e.g., speech content and/or text content) based on at least one of the plurality of images.

The third type is that neither the electronic device 110 nor the terminal device 120 is deployed with the pre-trained model, and the server 130 is deployed with the pre-trained model. The terminal device 120 may send (210) the plurality of images received from the electronic device 110 to the server 130 in communication with the terminal device 120. Further, the server 130 may provide the plurality of images to the pre-trained model deployed at the server 130. The server 130 may use (220) the pre-trained model to generate content (e.g., speech content and/or text content) based on at least one of the plurality of images.

In some embodiments, before generating the content based on the at least one of the plurality of images using the pre-trained model, it is necessary to first determine whether a target image in the plurality of images satisfies a trigger condition. The target image here may refer to any one of the plurality of images. For example, in the present disclosure, it may be determined in turn whether each of the plurality of images satisfies the trigger condition.

As an example, the electronic device 110 may determine (214) whether the target image in the plurality of images satisfies the trigger condition based on the pre-trained model deployed at the electronic device 110. Alternatively, the terminal device 120 may determine (216) whether the target image in the plurality of images satisfies the trigger condition based on the pre-trained model triggered by the terminal device 120. Alternatively, the server 130 may determine (212) whether the target image in the plurality of images satisfies the trigger condition based on the pre-trained model deployed at the server 130.

Alternatively, the terminal device 120 may determine whether the target image in the plurality of images satisfies the trigger condition by using another model. Such another model may be implemented as a classification model (e.g., a classification model whose output result includes that the target image satisfies the trigger condition or the target image fails to satisfy the trigger condition). Such a classification model may be deployed in the terminal device 120 or the server 130 communicating with the terminal device 120, for example. The present disclosure is not intended to limit the specific implementation or training process of the classification model.

In some embodiments, such a trigger condition may include, for example, that the target image matches a preset scene. As an example, the preset scene may include a scene determined by the pre-trained model or a scene set manually. For example, such a preset scene may include a "supermarket", a "snow scene", a "rainbow", a "historical building", and/or a "sunset", etc. For example, if a "rainbow" is included in the target image, it may be determined that the target image matches the preset scene (e.g., the "rainbow"), thereby satisfying the trigger condition. Further, in response to the target image being determined to satisfy the trigger condition, the pre-trained model may generate the response content based on the target image. The response content may include speech content and/or text content (e.g., text content corresponding to the speech content or other text content). In addition, a theme of the speech content generated by the pre-trained model based on the target image is associated with the preset scene corresponding to the target image. For example, if the target image includes a "rainbow", the theme of the corresponding speech content may be associated with the "rainbow". For example, such speech content may include "Look, there's a rainbow".

As an example, the electronic device 110 may be associated with the voice assistant application installed in the terminal device 110. The trigger condition may include that the target image matches historical information of the voice assistant application. The historical information here may indicate, for example, historical interaction between the user 150 and the voice assistant application. The historical interaction here may indicate a historical conversation between the user 150 and the voice assistant application, etc. For example, if the historical interaction between the user 150 and the voice assistant application is related to "pastry recommendation", it may be determined that the target image matches the historical information of the voice assistant application when the target image includes a "pastry shop". Therefore, the target image satisfies the trigger condition. In addition, a theme of the speech content generated by the pre-trained model based on the target image is associated with the historical information corresponding to the target image. For example, if the target image includes a "pastry shop", the theme of the corresponding speech content may be associated with the "pastry shop". For example, such speech content may include "This pastry shop suits your taste very well". Alternatively, the pre-trained model may also generate speech content based on the historical information. In this way, the generated speech content may contain the historical interaction between the user 150 and the voice assistant application. For example, the historical interaction between the user 150 and the voice assistant application includes conversation content (e.g., "I don't know where the pastry shop of brand A is") of the user 150. The pre-trained model may generate speech content (e.g., "Look, I've found the pastry shop of brand A for you") based on the conversation content and the target image (e.g., an image including the "pastry shop of brand A"). It should be noted that the user-related information (including but not limited to historical information) mentioned in the present disclosure is acquired and used with the knowledge and authorization of the relevant user.

As an example, the trigger condition may also be set based on a voice instruction (e.g., also referred to as a first instruction) of the user. For example, the trigger condition set based on the voice instruction of the user may include "tell me when you see XX bookstore", so that it may be determined that the target image satisfies the trigger condition when the target image includes "XX bookstore". For example, the pre-trained model may generate the response content (e.g., "there is the XX bookstore you mentioned at the intersection ahead") based on the target image (e.g., an image including the "XX bookstore").

In some embodiments, when the pre-trained model is deployed at the server 130, the server 130 may send (222) the response content (including speech content and/or text content) generated based on the pre-trained model deployed at the server 130 to the terminal device 120. The terminal device 120 may send (224) the response content to the electronic device 110.

In some embodiments, when the pre-trained model is deployed at the terminal device 120, the terminal device 120 may send (224) the response content generated based on the pre-trained model deployed at the terminal device 120 to the electronic device 110.

In some embodiments, the electronic device 110 may use (226) the content output unit to actively output content (e.g., the audio playing unit 118 actively plays speech content (or referred to as audio content) and/or the screen display unit actively displays image content (e.g., pictures and/or videos) and/or text content). In this way, the embodiment of the present disclosure may implement that the electronic device 110 generates the corresponding speech content based on the captured image to actively interact with the user, thereby improving the efficiency of the user in obtaining information.

In some embodiments, continuing to refer to Fig. 3A, the electronic device 110 may trigger display of a first message corresponding to the speech content in the interactive interface associated with the electronic device 110. For example, such an interactive interface may be provided by the screen display unit. Alternatively, such an interactive interface may be presented by the terminal device 120 in wireless communication with the electronic device 110, for example, the interactive interface 300A. The terminal device 120 may present the first message 305 (e.g., "Look, there's a rainbow") corresponding to the speech content in the interactive interface 300A.

In some embodiments, continuing to refer to Fig. 2, the terminal device 120 may present one or more of the plurality of images in an interactive application associated with the electronic device 110. Alternatively, the electronic device 110 may trigger display of one or more of the plurality of images in the interactive interface associated with the electronic device 110. As an example, the one or more images may include the target image for generating the content (e.g., the speech content and/or the text content). The one or more images may include, for example, a first captured image in the plurality of images. For example, as shown in Fig. 3A, the terminal device 120 may present an image 310 in the plurality of images in the interactive interface 300A.

In some embodiments, the plurality of images captured by the electronic device 110 and/or the context information associated with the plurality of images are automatically deleted after a preset period of time (e.g., 2 hours). In this way, the privacy of the user may be effectively protected, and the device storage space of the electronic device 110 or the terminal device 120 of the user may be saved.

Additionally or alternatively, the terminal device 120 may present reminder information 315 (e.g., "The photo will be automatically destroyed X hours after the conversation ends") in the interactive interface 300A to remind the user 150 that the image 310 and the like presented in the interactive interface 300A will be deleted after X hours.

In some embodiments, continuing to refer to Fig. 2, the terminal device 120 may stop (234) presenting the one or more of the plurality of images in the interactive application associated with the electronic device 110 in response to the preset period of time (e.g., 2 hours) being reached. As an example, as shown in Fig. 3B, the terminal device 120 may stop presenting the one or more images in the interactive interface 300B in response to presenting the one or more of the plurality of images for the preset period of time (e.g., 2 hours). Alternatively, the terminal device 120 may present an indication element 320 (e.g., "The photo has been destroyed") in the interactive interface to indicate that the one or more images are stopped being presented and deleted.

Additionally or alternatively, the terminal device 120 (or the server 130) may delete the plurality of images obtained from the electronic device 110 and stored at the terminal device 120 (or the server 130) or the pre-trained model in response to the preset period of time (e.g., 2 hours) being reached.

In some embodiments, continuing to refer to Fig. 2, the electronic device 110 may pause (228) the first mode. As an example, during the electronic device 110 is in the first mode, the electronic device 110 may pause the first mode in response to a pause condition to stop periodically capturing images.

As an example, such a pause condition may include, for example, that the wearing state of the electronic device 110 fails to satisfy a preset condition. For example, at least one device (e.g., a left-ear headphone or a right-ear headphone in the headphone device) of the electronic device 110 is taken off, so that the electronic device 110 is not worn by the user 150.

As an example, such a pause condition may include, for example, a voice instruction (also referred to as a fourth voice instruction) received via the audio acquisition unit of the electronic device 110. Such a voice instruction may include a preset keyword (e.g., "pause the first mode", etc.) associated with pausing the first mode.

As an example, such a pause condition may include, for example, that the electronic device 110 is triggered to provide audio content associated with the connected terminal device 120. For example, such audio content may include, for example, a ringtone (e.g., receiving an incoming call) of a phone or a video call. Such audio content may also include an alarm, etc.

As an example, such a pause condition may include, for example, that a degree of occlusion of the image acquisition unit 115 is greater than a preset degree (e.g., 50%). For example, when the degree of occlusion of the image acquisition unit 115 of the electronic device 110 is greater than 50%, the first mode of the electronic device 110 is exited to remind the user 150 that the image acquisition unit 115 is occluded.

In some embodiments, such a pause condition may further include that the power of the electronic device 110 is less than a preset threshold (e.g., 5%), the communication connection between the electronic device 110 and the terminal device 120 is disconnected, and/or the network connection of the terminal device 120 is disconnected, etc.

Alternatively, the electronic device 110 may resume (230) the first mode in response to the pause condition no longer being satisfied. For example, the electronic device 110 may resume the first mode in response to the end of the phone, video call, or alarm, etc. For example, the electronic device 110 may resume the first mode in response to the wearing state of the electronic device 110 satisfying the preset condition (e.g., at least one device in the electronic device 110 is in a worn state). For example, the electronic device 110 may resume the first mode in response to receiving a voice instruction (e.g., a voice instruction associated with resuming the first mode, e.g., "resume the first mode") from the user. For example, the electronic device 110 may resume the first mode in response to the degree of occlusion of the image acquisition unit 115 being less than a preset threshold (e.g., 50%).

In some embodiments, continuing to refer to Fig. 2, the electronic device 110 may exit (232) the first mode. For example, the electronic device 110 may exit the first mode in response to the power of the electronic device 110 being below a threshold (e.g., 5%). Alternatively, the electronic device 110 may exit the first mode in response to the wearing state of the electronic device 110 (e.g., the user 150 stops wearing the electronic device 110 (e.g., takes off the headphone device)). Alternatively, the electronic device 110 may exit the first mode in response to a voice instruction (also referred to as a third voice instruction) received via the audio acquisition unit. For example, such a third voice instruction may be associated with a preset keyword (e.g., "exit the first mode", "turn off the first mode", etc.). Alternatively, the electronic device 110 may exit the first mode via an exit operation (e.g., triggering of a control associated with exiting the first mode) received in the interactive interface associated with the electronic device 110.

In some embodiments, the electronic device 110 may further present media content and/or text content generated based on the plurality of images in the interactive interface associated with the electronic device 110 in response to exiting the first mode. Continuing to refer to Fig. 2, the terminal device 120 may present (236) media content (e.g., picture content and/or video content) and/or text content generated based on the plurality of images in response to the electronic device 110 exiting the first mode. As an example, such media content or text content may be used as a summary of the plurality of images captured and the plurality of pieces of speech content played by the electronic device 110 during the first mode. For example, such media content and/or text content may be generated by the pre-trained model based on the plurality of images and the plurality of pieces of speech content.

In some embodiments, as shown in Fig. 3C, the terminal device 110 may present summary content 325 (e.g., including media content 325-2 and text content 325-1, etc.) generated based on the plurality of images in the interactive interface 300C associated with the electronic device 110.

Based on the process described above, the embodiment of the present disclosure is capable of using the image acquisition unit equipped on the electronic device to periodically capture the plurality of images when the electronic device is in the first mode. Moreover, the embodiment of the present disclosure is capable of using the electronic device to obtain and play the speech content generated by the pre-trained model based on the at least one of the plurality of images. In this way, the electronic device provided in the embodiment of the present disclosure is capable of periodically capturing images, thereby being capable of obtaining information about the surroundings of the user in real time. In addition, the electronic device provided in the embodiment of the present disclosure is capable of using the pre-trained model to generate the speech content based on the captured images and actively playing the speech content to the user, which may improve the efficiency of the user in obtaining information. Therefore, the embodiment of the present disclosure expands the interaction capability between the electronic device and the user, and meets the interaction needs of the user.

### EXAMPLE PROCESS

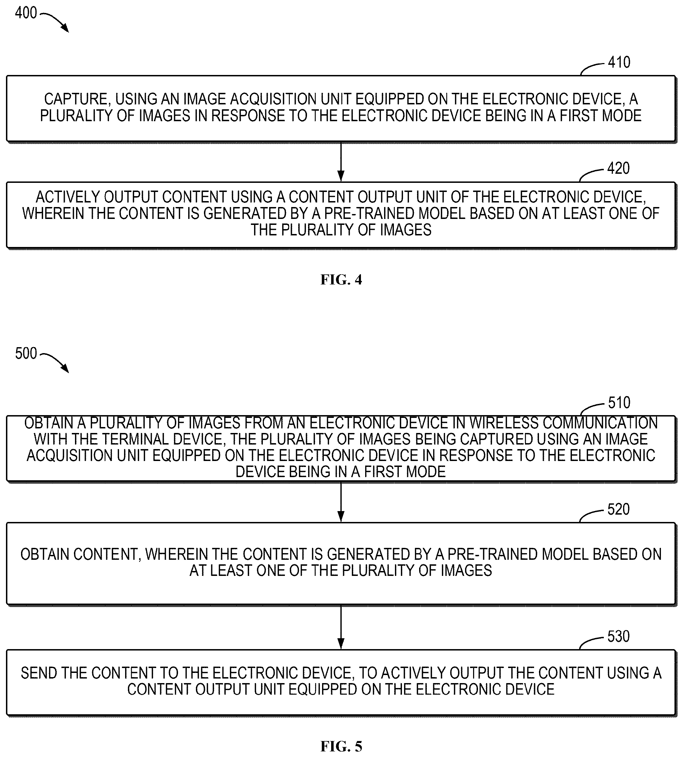

Fig. 4 shows a flowchart of an example process 400 of image interaction according to some embodiments of the present disclosure. The process 400 may be implemented at the electronic device 110. The process 400 is described below with reference to Fig. 1.

As shown in Fig. 4, at block 410, the electronic device 110 captures, using an image acquisition unit equipped on the electronic device 110, a plurality of images in response to the electronic device 110 being in a first mode.

At block 420, the electronic device 110 actively outputs content using a content output unit of the electronic device 110, where the content is generated by a pre-trained model based on at least one of the plurality of images.

In some embodiments, the electronic device 110 includes a wearable device; and/or the content output unit includes at least one of a screen display unit or an audio playing unit.

In this way, the embodiment of the present disclosure may support the wearable device in actively outputting content using the screen display unit and/or the audio playing unit based on the plurality of captured images, thereby facilitating the improvement of interaction efficiency between the user and the wearable device.

In some embodiments, the electronic device 110 communicates wirelessly with a terminal device 120, and the content includes at least speech content.

In this way, the embodiment of the present disclosure may support the electronic device 110 in actively outputting the speech content, thereby improving the interaction efficiency between the user and the electronic device.

In some embodiments, the speech content is generated based on the following process: sending, by the electronic device 110, the plurality of images to the terminal device 120; providing, by the terminal device 120, the plurality of images to the pre-trained model; and generating, by the pre-trained model, the speech content based on the at least one of the plurality of images, where the pre-trained model is deployed at the terminal device 120 or a server 130 in communication with the terminal device 120.

In this way, the embodiment of the present disclosure is capable of using the pre-trained model to generate the speech content based on the plurality of images, so that the electronic device 110 may use the audio playing unit to actively play the speech content to the user, thereby meeting the interaction needs of the user.

In some embodiments, the content is generated based on the following process: obtaining a target image of the plurality of images captured by the electronic device 110; and in response to the target image being determined to satisfy a trigger condition, generating response content using the pre-trained model based on the target image, the response content including the speech content and/or the text content.

In this way, the embodiment of the present disclosure generates the response content for the target image that satisfies the trigger condition based on the pre-trained model, which may meet the interaction needs of the user.

In some embodiments, the trigger condition includes that the target image matches a preset scene, and a theme of the response content is associated with the preset scene; and/or the trigger condition is set based on a first voice instruction of the user.

In this way, the embodiment of the present disclosure is capable of providing the user with the speech content associated with the preset scene based on the preset scene, thereby being capable of improving the efficiency of the user in obtaining information. Moreover, the embodiment of the present disclosure supports that the user sets the corresponding trigger condition via the voice instruction, thereby being capable of improving the interaction efficiency of the user.

In some embodiments, the electronic device 110 is associated with a voice assistant application, and the trigger condition includes that the target image matches historical information of the voice assistant application, the historical information indicating historical interaction between the user and the voice assistant application.

In this way, the embodiment of the present disclosure is capable of determining that the target image satisfies the trigger condition based on the historical interaction between the user and the voice assistant application, thereby being capable of meeting the interaction needs of the user.

In some embodiments, the speech content is generated further based on the historical information.

In this way, the embodiment of the present disclosure is capable of determining the speech content based on the historical information of the user and the voice assistant application, so that the speech content may be more in line with the expectations or needs of the user.

In some embodiments, the process 400 further includes: in response to the electronic device 110 exiting the first mode, presenting, in an interactive interface associated with the electronic device 110, media content and/or text content generated based on the plurality of images.

In this way, the embodiment of the present disclosure is capable of generating the corresponding media content and/or text content after the electronic device 110 exits the first mode, thereby being capable of recording and summarizing the interaction process of the electronic device 110 during the first mode, facilitating the subsequent viewing of the user, and meeting the needs of the user.

In some embodiments, capturing the plurality of images using the image acquisition unit equipped on the electronic device 110 includes: determining a resolution associated with the first mode; and capturing at least a portion of the plurality of images based on the resolution; and/or determining a time interval associated with the first mode, and periodically capturing the plurality of images based on the time interval; and/or determining a time length associated with the first mode, and capturing the plurality of images within the time length based on the time length.

In this way, the images may be captured based on the configured resolution, which ensures the stability of the image quality. In addition, the embodiment of the present disclosure is capable of determining the time period and/or time length for capturing the plurality of images based on the configuration information, thereby being capable of supporting the user in using different time periods and/or time lengths to capture images.

In some embodiments, the first mode is enabled in response to an enable request of a user, and the enable request includes: an enable operation received in the interactive interface associated with the electronic device 110; or a second voice instruction received via the audio acquisition unit.

In this way, the embodiment of the present disclosure may provide the user with various enable operations for enabling the first mode, thereby improving the efficiency of the user in enabling the first mode of the electronic device.

In some embodiments, the electronic device 110 includes a plurality of image acquisition units, and capturing the plurality of images using the image acquisition unit equipped on the electronic device 110 includes: capturing all the plurality of images using a target image acquisition unit in the plurality of image acquisition units, the target image acquisition unit being determined based on configuration information associated with the first mode and/or a wearing state of the electronic device 110.

In this way, the embodiment of the present disclosure is capable of determining the target acquisition unit for capturing the plurality of images based on the configuration information, thereby being capable of meeting the diverse needs of the user and improving the efficiency. In addition, the embodiment of the present disclosure is capable of determining the target acquisition unit for capturing the plurality of images based on the wearing state, which may adapt to the wearing operation of the user, so that the user may freely choose the wearing manner, bringing convenience to the user.

In some embodiments, the electronic device includes a plurality of image acquisition units, and capturing the plurality of images using the image acquisition unit equipped on the electronic device 110 includes: capturing a first set of images using a first image acquisition unit in the plurality of image acquisition units during a first round of conversation; and capturing a second set of images using a second image acquisition unit in the plurality of image acquisition units during a second round of conversation after the first round of conversation ends, the second image acquisition unit being different from the first image acquisition unit.

In this way, the embodiment of the present disclosure may support using different image acquisition units to capture images in different rounds of conversation, thereby being capable of avoiding problems such as performance degradation or insufficient power caused by a single image acquisition unit continuously working, and thus ensuring the stability of the image capturing function. In addition, in the same round of conversation, using the same image acquisition unit may ensure that the capturing level or capturing effect of the plurality of images associated with the same round of conversation remains consistent.

In some embodiments, the plurality of images and/or context information associated with the plurality of images are automatically deleted after a preset period of time.

In this way, the embodiment of the present disclosure may protect the privacy of the user and save device storage space for the user.

In some embodiments, the process 400 further includes: exiting the first mode in response to the power of the electronic device 110 being below a threshold; and/or exiting the first mode in response to a third voice instruction received via the audio acquisition unit; and/or exiting the first mode via an exit operation received in the interactive interface associated with the electronic device.

In this way, the embodiment of the present disclosure is capable of exiting the electronic device from the first mode when the preset condition is satisfied, thereby being capable of meeting the needs of the user and ensuring the stability of the function provided when the electronic device is in the first mode. In addition, the embodiment of the present disclosure is capable of exiting the electronic device from the first mode based on the voice instruction of the user or the exit operation in the interactive interface, thereby improving the interaction efficiency of the user.

In some embodiments, the process 400 further includes: during the electronic device 110 is in the first mode, pausing the first mode in response to a pause condition being satisfied to stop capturing images, the pause condition including at least one of: the electronic device 110 includes a wearable device, and a wearing state of the wearable device fails to satisfy a preset condition; a fourth voice instruction is received via the audio acquisition unit of the electronic device; the electronic device 110 is triggered to provide audio content associated with the connected terminal device 120; or a degree of occlusion of the image acquisition unit is greater than a preset degree.

In this way, the embodiment of the present disclosure is capable of pausing the electronic device in the first mode when the pause condition is satisfied, thereby being capable of meeting the needs of the user, ensuring the stability of the function provided when the electronic device is in the first mode, and ensuring the normal operation of other applications.

In some embodiments, the process 400 further includes: triggering display of the following in the interactive interface associated with the electronic device 110: a first message corresponding to the content; and at least one image for generating the content; and/or triggering a mode reminder unit associated with the electronic device to provide a reminder signal about the electronic device being in the first mode.

In this way, the embodiment of the present disclosure is capable of presenting various content associated with the first mode in the interactive interface, thereby meeting the viewing needs and interaction needs of the user. Moreover, the embodiment of the present disclosure is capable of enabling the current user and other users to clearly confirm whether the electronic device 110 is in the first mode based on the reminder signal, thereby meeting the needs of the user.

In some embodiments, the electronic device 110 is a headphone device or a glasses device equipped with at least one camera.

In this way, the embodiment of the present disclosure may satisfy the visual interaction needs of the user by mounting a camera on the headphone device or the glasses device.

Fig. 5 shows a flowchart of an example process 500 of image interaction according to some embodiments of the present disclosure. The process 500 may be implemented at the terminal device 120. The process 500 is described below with reference to Fig. 1.

As shown in Fig. 5, at block 510, the terminal device 120 obtains a plurality of images from an electronic device 110 in wireless communication with the terminal device 120, wherein the plurality of images are captured using an image acquisition unit equipped on the electronic device 110 when the electronic device 110 is in a first mode.

At block 520, the terminal device 120 obtains content, wherein the content is generated by a pre-trained model based on at least one of the plurality of images.

At block 530, the terminal device 120 sends the content to the electronic device 110, to actively output the content using a content output unit equipped on the electronic device 110.

In some embodiments, the electronic device 110 includes a wearable device; and/or the content output unit includes at least one of a screen display unit or an audio playing unit.

In this way, the embodiment of the present disclosure may support the wearable device in actively outputting content using the screen display unit and/or the audio playing unit based on the plurality of captured images, thereby facilitating the improvement of interaction efficiency between the user and the wearable device.

**In** some embodiments, the process 500 further includes: receiving the plurality of images from the electronic device 110; and providing the plurality of images to the pre-trained model for generating the content.

**In** this way, the embodiment of the present disclosure is capable of using the pre-trained model to generate the content based on the plurality of images, so that the electronic device 110 may use the content output unit to actively output the content to the user, thereby meeting the interaction needs of the user.

**In** some embodiments, the process 500 further includes: obtaining a target image in the plurality of images captured by the electronic device; and providing the target image to the pre-trained model for generating the content, in response to the target image being determined to satisfy a trigger condition.

**In** this way, the embodiment of the present disclosure generates the response content for the target image that satisfies the trigger condition based on the pre-trained model, which may meet the interaction needs of the user.

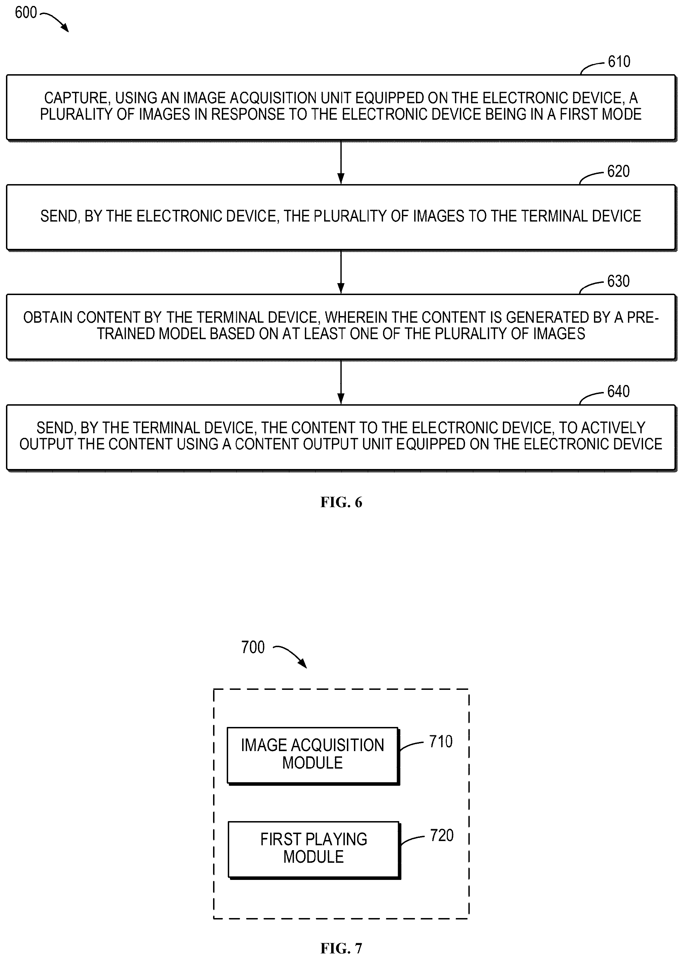

Fig. 6 shows a flowchart of an example process 600 of image interaction according to some embodiments of the present disclosure. The process 600 may be implemented in an image interaction system 100. The image interaction system 100 includes an electronic device 110 and a terminal device 120 that are in wireless communication. The process 600 is described below with reference to Fig. 1.

As shown in Fig. 6, at block 610, the image interaction system 100 captures, using an image acquisition unit equipped on the electronic device 110, a plurality of images when the electronic device 110 is in a first mode.

At block 620, the image interaction system 100 sends, by the electronic device 110, the plurality of images to a terminal device 120.

At block 630, the image interaction system 100 obtains content by the terminal device 120, wherine the content is generated by a pre-trained model based on at least one of the plurality of images.

At block 640, the image interaction system 100 sends, by the terminal device 120, speech content to the electronic device 110, to actively output the content using a content output unit equipped on the electronic device 110.

### EXAMPLE APPARATUS AND DEVICE

An embodiment of the present disclosure further provides a corresponding apparatus for implementing the above method or process.

Fig. 7 shows a schematic structural block diagram of an example apparatus 700 for image interaction according to some embodiments of the present disclosure. The apparatus 700 may be implemented as or included in the electronic device 110. Each module/component in the apparatus 700 may be implemented by hardware, software, firmware, or any combination thereof.

As shown in Fig. 7, the apparatus 700 includes: an image acquisition module 710 configured to capture, using an image acquisition unit equipped on the electronic device 110, a plurality of images when the electronic device 110 is in a first mode; and a first playing module 720 configured to actively output content using a content output unit of the electronic device 110, wherein the content is generated by a pre-trained model based on at least one of the plurality of images.

In some embodiments, the electronic device 110 includes a wearable device; and/or the content output unit includes at least one of a screen display unit or an audio playing unit.

bn some embodiments, the electronic device 110 communicates wirelessly with the terminal device 120, and the content at least includes speech content.

In some embodiments, the speech content is generated based on the following process: sending, by the electronic device 110, the plurality of images to the terminal device 120; providing, by the terminal device 120, the plurality of images to the pre-trained model; and generating, by the pre-trained model, the speech content based on the at least one of the plurality of images, where the pre-trained model is deployed at the terminal device 120 or a server 130 in communication with the terminal device 120.

In some embodiments, the content is generated based on the following process: obtaining a target image of the plurality of images captured by the electronic device 110; and in response to the target image being determined to satisfy a trigger condition, generating response content using the pre-trained model based on the target image, wherein the response content is speech content and/or text content.

In some embodiments, the trigger condition includes that the target image matches a preset scene, and a theme of the response content is associated with the preset scene; and/or the trigger condition is set based on a first voice instruction of a user.

In some embodiments, the electronic device 110 is associated with a voice assistant application, and the trigger condition includes that the target image matches historical information of the voice assistant application, the historical information indicates historical interaction between a user and the voice assistant application.

In some embodiments, the speech content is generated further based on the historical information.

In some embodiments, the apparatus 700 further includes a presenting module configured to: in response to the electronic device 110 exiting the first mode, present, in an interactive interface associated with the electronic device 110, media content and/or text content generated based on the plurality of images.

In some embodiments, the image acquisition module 710 is further configured to: determine a resolution associated with the first mode; and capture at least a portion of the plurality of images based on the resolution; and/or determine a time interval associated with the first mode, and periodically capture the plurality of images based on the time interval; and/or determine a time length associated with the first mode, and capture the plurality of images within the time length based on the time length.

In some embodiments, the first mode is enabled in response to an enable request of a user, and the enable request includes: an enable operation received in the interactive interface associated with the electronic device 110; or a second voice instruction received via the audio acquisition unit.

In some embodiments, the electronic device 110 includes a plurality of image acquisition units, and the image acquisition module 710 is further configured to: capture all the plurality of images using a target image acquisition unit in the plurality of image acquisition units, wherein the target image acquisition unit is determined based on configuration information associated with the first mode and/or a wearing state of the electronic device 110.

In some embodiments, the electronic device includes a plurality of image acquisition units, and the image acquisition module 710 is further configured to: capture a first set of images using a first image acquisition unit in the plurality of image acquisition units during a first round of conversation; and capture a second set of images using a second image acquisition unit in the plurality of image acquisition units during a second round of conversation after the first round of conversation ends, wherein the second image acquisition unit is different from the first image acquisition unit.

In some embodiments, the plurality of images and/or context information associated with the plurality of images are automatically deleted after a preset period of time.

In some embodiments, the apparatus 700 further includes an exiting module configured to: exit the first mode in response to the power of the electronic device 110 being below a threshold; and/or exit the first mode in response to a third voice instruction received via the audio acquisition unit; and/or exit the first mode via an exit operation received in the interactive interface associated with the electronic device.

In some embodiments, the apparatus 700 further includes a pausing module configured to: during the electronic device 110 is in the first mode, pause the first mode in response to a pause condition being satisfied to stop capturing images, the pause condition including at least one of: the electronic device 110 includes a wearable device, and a wearing state of the wearable device fails to satisfy a preset condition; a fourth voice instruction is received via the audio acquisition unit of the electronic device 110; the electronic device 110 is triggered to provide audio content associated with the connected terminal device 120; and a degree of occlusion of the image acquisition unit is greater than a preset degree.

In some embodiments, the apparatus 700 further includes a triggering module configured to: trigger display of the following in the interactive interface associated with the electronic device 110: a first message corresponding to the content; and at least one image for generating the content; and/or trigger a mode reminder unit associated with the electronic device to provide a reminder signal about the electronic device being in the first mode.

In some embodiments, the electronic device 110 is a headphone device or a glasses device equipped with at least one camera.

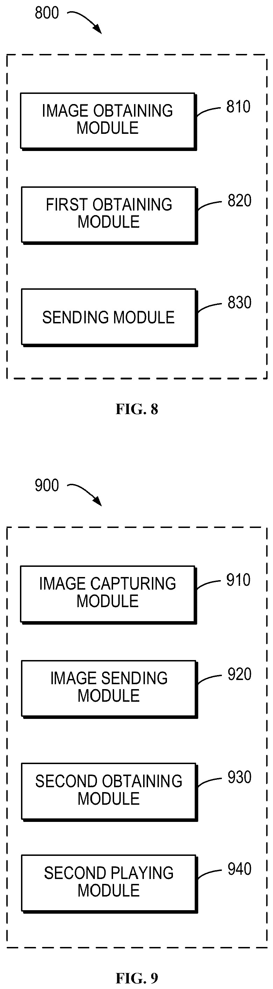

Fig. 8 shows a schematic structural block diagram of an example apparatus 800 for image interaction according to some embodiments of the present disclosure. The apparatus 800 may be implemented as or included in the terminal device 120. Each module/component in the apparatus 800 may be implemented by hardware, software, firmware, or any combination thereof.

As shown in Fig. 8, the apparatus 800 includes: an image obtaining module 810 configured to obtain a plurality of images from an electronic device 110 in wireless communication with the terminal device 120, wherein the plurality of images are captured using an image acquisition unit equipped on the electronic device 110 when the electronic device 110 is in a first mode; a first obtaining module 820 configured to obtain content, wherein the content is generated by a pre-trained model based on at least one of the plurality of images; and a sending module 830 configured to send the content to the electronic device 110, to actively output the content using a content output unit equipped on the electronic device 110.

In some embodiments, the electronic device 110 includes a wearable device; and/or the content output unit includes at least one of a screen display unit or an audio playing unit.

In some embodiments, the apparatus 800 further includes a first providing module configured to: receive the plurality of images from the electronic device 110; and provide the plurality of images to the pre-trained model for generating the content.

In some embodiments, the apparatus 800 further includes a second providing module configured to: obtain a target image in the plurality of images captured by the electronic device; and provide the target image to the pre-trained model for generating the content, in response to the target image being determined to satisfy a trigger condition.

Fig. 9 shows a schematic structural block diagram of an example apparatus 900 for image interaction according to some embodiments of the present disclosure. The apparatus 900 may be implemented as or included in the image interaction system 100. The image interaction system 100 includes an electronic device 110 and a terminal device 120 that are in wireless communication. Each module/component in the apparatus 900 may be implemented by hardware, software, firmware, or any combination thereof.

As shown in Fig. 9, the apparatus 900 includes: an image capturing module 910 configured to capture, using an image acquisition unit equipped on the electronic device 110, a plurality of images when the electronic device 110 is in a first mode; an image sending module 920 configured to send, by the electronic device 110, the plurality of images to the terminal device 120; a second obtaining module 930 configured to obtain content by the terminal device 120, wherein the content is generated by a pre-trained model based on at least one of the plurality of images; and a second playing module 950 configured to send, by the terminal device 120, speech content to the electronic device 110, to actively output the content using a content output unit equipped on the electronic device 110.

The units included in the apparatus 700, 800, or 900 may be implemented in various ways, including software, hardware, firmware, or any combination thereof. In some embodiments, one or more units may be implemented using software and/or firmware, such as machine-executable instructions stored on a storage medium. In addition to machine-executable instructions or as an alternative, some or all units in the apparatus 700, 800, or 900 may be implemented at least partially by one or more hardware logic components. As an example, rather than a limitation, example types of hardware logic components that may be used include field programmable gate array (FPGA), application specific integrated circuit (ASIC), application specific standard (ASSP), system-on-chip (SOC), complex programmable logic device (CPLD), and so on.

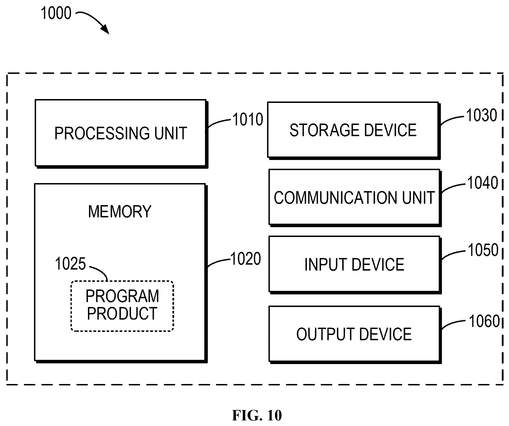

Fig. 10 shows a block diagram of an electronic device 1000 in which one or more embodiments of the present disclosure may be implemented. It should be understood that the electronic device 1000 shown in Fig. 10 is only exemplary and should not constitute any limitation on the functionality and scope of the embodiments described herein. The electronic device 1000 shown in Fig. 10 may be used to implement the image interaction system 100 of Fig. 1.

As shown in Fig. 10, the electronic device 1000 is in the form of a general electronic device. The components of the electronic device 1000 may include, but are not limited to, one or more processors or processing units 1010, a memory 1020, a storage device 1030, one or more communication units 1040, one or more input devices 1050, and one or more output devices 1060. The processing unit 1010 may be an actual or virtual processor and may execute various processes based on the programs stored in the memory 1020. In a multi-processor system, multiple processing units execute computer executable instructions in parallel to improve the parallel processing capability of the electronic device 1000.

The electronic device 1000 typically includes multiple computer storage media. Such media may be any available media that is accessible to the electronic device 1000, including but not limited to volatile and non-volatile media, and removable and non-removable media. The memory 1020 may be a volatile memory (e.g., a register, cache, Random Access Memory (RAM)), a non-volatile memory (e.g., a Read-Only Memory (ROM), Electrically Erasable Programmable Read-Only Memory (EEPROM), flash memory), or any combination thereof. The storage device 1030 may be a removable or non-removable medium, and may include a machine-readable medium such as a flash drive, a disk, or any other medium, which may be used to store information and/or data and may be accessed within the electronic device 1000.

The electronic device 1000 may further include other removable/non-removable, volatile/non-volatile storage media. Although not shown in Fig. 10, a disk drive for reading from or writing to a removable, non-volatile disk (e.g., a "floppy disk"), and an optical disk drive for reading from or writing to a removable, non-volatile optical disk may be provided. In these cases, each drive may be connected to the bus (not shown) by one or more data medium interfaces. The memory 1020 may include a computer program product 1025 having one or more program modules that are configured to perform various methods or acts of the various embodiments of the present disclosure.

The communication unit 1040 implements communication with other electronic devices through the communication medium. Additionally, the functionality of the components of the electronic device 1000 may be implemented in a single computing cluster or multiple computing machines that may communicate over communication connections. Therefore, the electronic device 1000 may use a logical connection with one or more other servers, network personal computers (PCs) or another network node to operate in a networked environment.

The input device 1050 may be one or more input devices, such as a mouse, a keyboard, a tracking ball, etc. The output device 1060 may be one or more output devices, such as a display, a speaker, a printer, etc. The electronic device 1000 may also communicate with one or more external devices (not shown) as needed through the communication unit 1040, the external devices such as a storage device, a display device, etc., with one or more devices that allow a user to interact with the electronic device 1000, or with any device (e.g., a network card, a modem, etc.) that allows the electronic device 1000 to communicate with one or more other electronic devices. Such communication may be performed via input/output (I/O) interfaces (not shown).

According to an exemplary implementation of the present disclosure, there is provided a computer-readable storage medium having computer-executable instructions stored thereon, where the computer-executable instructions are executed by a processor to implement the method described above. According to an exemplary implementation of the present disclosure, there is also provided a computer program product tangibly stored on a non-transitory computer-readable medium and including computer-executable instructions, and the computer-executable instructions are executed by a processor to implement the method described above.

Various aspects of the present disclosure are described herein with reference to the flowcharts and/or block diagrams of the methods, apparatuses, devices, and computer program products implemented according to the present disclosure. It should be understood that each block of the flowcharts and/or block diagrams, and combinations of blocks in the flowcharts and/or block diagrams may be implemented by computer-readable program instructions.

These computer-readable program instructions may be provided to the processing unit of a general computer, a special computer, or other programmable data processing apparatus to produce a machine, such that when the instructions are executed by the processing unit of the computer or other programmable data processing apparatus, the apparatus implementing the functions/actions specified in one or more blocks of the flowcharts and/or block diagrams is produced. These computer-readable program instructions may also be stored in the computer-readable storage medium, and these instructions make the computer, the programmable data processing apparatus, and/or other devices work in a specific way, so that the computer-readable medium storing the instructions includes a manufactured product, which includes instructions for implementing various aspects of the functions/actions specified in one or more blocks of the flowcharts and/or block diagrams.

The computer-readable program instructions may be loaded on a computer, another programmable data processing apparatus, or other devices, so that a series of operation steps are performed on the computer, the other programmable data processing apparatus, or the other devices to produce a computer-implemented process, so that the instructions executed on the computer, the other programmable data processing apparatus, or the other devices implement the functions/actions specified in one or more blocks of the flowcharts and/or block diagrams.

The flowcharts and block diagrams in the drawings show the architecture, functionality, and operation of possible implementations of the systems, methods and computer program products according to various implementations of the present disclosure. In this regard, each block in the flowchart or block diagrams may represent a module, a program segment, or a portion of an instruction, which includes one or more executable instructions for implementing the specified logical functions. In some alternative implementations, the functions marked in the block may also occur in an order different from that marked in the drawings. For example, two consecutive blocks may actually be performed substantially in parallel, or they may sometimes be performed in a reverse order, depending on the functions involved. It should also be noted that each block of the block diagrams and/or flowcharts, and combinations of the blocks in the block diagrams and/or flowcharts may be implemented by a dedicated hardware-based system that perform specified functions or acts, or may be implemented by a combination of dedicated hardware and computer instructions.

Various implementations of the present disclosure have been described above, and the above description is exemplary, not exhaustive, and is not limited to the disclosed implementations. Without departing from the scope and spirit of the described implementations, many modifications and changes will be apparent to those skilled in the art. The choice of terms used herein is intended to best explain the principles of the implementations, the practical application or improvement to the technology in the market, or to enable other ordinary skilled in the art to understand the various implementations disclosed herein.

## Claims

1. A method (400) of image interaction, applied on an electronic device, the method comprising:
capturing (410), using an image acquisition unit equipped on the electronic device, a plurality of images in response to the electronic device being in a first mode; and
actively outputting (420) content using a content output unit of the electronic device, wherein the content is generated by a pre-trained model based on at least one of the plurality of images.

2. The method of claim 1, wherein the electronic device comprises a wearable device; and/or the content output unit comprises at least one of a screen display unit or an audio playing unit; and optionally,
wherein the wearable device communicates wirelessly with a terminal device, and the content at least comprises speech content.

3. The method of claim 2, wherein the speech content is generated through:
sending, by the wearable device, the plurality of images to the terminal device;
providing, by the terminal device, the plurality of images to the pre-trained model; and
generating, by the pre-trained model, the speech content based on the at least one of the plurality of images, wherein the pre-trained model is deployed at the terminal device or at a server in communication with the terminal device.

4. The method of claim 1, wherein the content is generated through:
obtaining a first image of the plurality of images captured by the electronic device; and
in response to the first image being determined to satisfy a trigger condition, generating response content using the pre-trained model based on the first image, the response content comprising speech content and/or text content.

5. The method of any preceding claim, further comprising:
in response to the electronic device exiting the first mode, presenting, in an interactive interface associated with the electronic device, media content and/or text content generated based on the plurality of images.

6. The method of any preceding claim, wherein capturing (410) the plurality of images using the image acquisition unit equipped on the electronic device comprises:
determining a resolution associated with the first mode, and capturing at least a portion of the plurality of images based on the resolution; and/or
determining a time interval associated with the first mode, and periodically capturing the plurality of images based on the time interval; and/or
determining a time length associated with the first mode, and capturing the plurality of images within the time length.

7. The method of any preceding claim, wherein the first mode is enabled in response to an enable request of a user, and the enable request comprises:
an enable operation received via an interactive interface associated with the electronic device; or
a second voice instruction received via an audio acquisition unit of the electronic device.

8. The method of any preceding claim, wherein the electronic device comprises a plurality of image acquisition units, and capturing (410) the plurality of images using the image acquisition unit equipped on the electronic device comprises:
capturing all the plurality of images using a single image acquisition unit in the plurality of image acquisition units, the single image acquisition unit being determined based on configuration information associated with the first mode and/or a wearing state of the electronic device;
or
capturing (410) the plurality of images using the image acquisition unit equipped on the electronic device comprises:
capturing a first set of images using a first image acquisition unit in the plurality of image acquisition units during a first round of conversation; and
capturing a second set of images using a second image acquisition unit in the plurality of image acquisition units during a second round of conversation after the first round of conversation ends, the second image acquisition unit being different from the first image acquisition unit.

9. The method of any preceding claim, wherein the plurality of images and/or context information associated with the plurality of images are automatically deleted after a preset period of time.

10. The method of any preceding claim, further comprising:
exiting the first mode in response to power of the electronic device being below a threshold; and/or
exiting the first mode in response to a third voice instruction received via an audio acquisition unit of the electronic device; and/or
exiting the first mode via an exit operation received in an interactive interface associated with the electronic device.

11. The method of any preceding claim, further comprising:
during the electronic device is in the first mode, pausing the first mode in response to a pause condition being satisfied to stop capturing images, the pause condition comprising at least one of:
the electronic device comprises a wearable device, and a wearing state of the wearable device fails to satisfy a preset condition;
a fourth voice instruction is received via an audio acquisition unit of the electronic device;
the electronic device is triggered to provide audio content associated with a connected terminal device;
a degree of occlusion of the image acquisition unit is greater than a preset degree.

12. The method of any preceding claim, further comprising:
triggering display of the following in an interactive interface associated with the electronic device: a first message corresponding to the content; and the at least one image for generating the content; and/or
triggering a mode reminder unit associated with the electronic device to provide a reminder signal about the electronic device being in the first mode.

13. A method (500) of image interaction, applied on a terminal device, the method comprising:
obtaining (510) a plurality of images from an electronic device in wireless communication with the terminal device, the plurality of images being captured using an image acquisition unit equipped on the electronic device in response to the electronic device being in a first mode;
obtaining (520) content, wherein the content is generated by a pre-trained model based on at least one of the plurality of images; and
sending (530) the content to the electronic device, to actively output the content using a content output unit equipped on the electronic device.

14. The method of claim 13, further comprising:
receiving the plurality of images from the electronic device; and
providing the plurality of images to the pre-trained model for generating the content.

15. A method (600) of image interaction, applied on an image interaction system comprising an electronic device and a terminal device in wireless communication, and the method comprises:
capturing (610), using an image acquisition unit equipped on the electronic device, a plurality of images in response to the electronic device being in a first mode;
sending (620), by the electronic device, the plurality of images to the terminal device;
obtaining (630) content by the terminal device, wherein the content is generated by a pre-trained model based on at least one of the plurality of images; and
sending (640), by the terminal device, the content to the electronic device, to actively output the content using a content output unit equipped on the electronic device.
